# EUROPEAN PATENT SPECIFICATION

(11) **EP 3 925 721 B1**
(45) Date of publication and mention of the grant of the patent: **30.09.2026**
(21) Application number: 20755092.2
(22) Date of filing: 04.02.2020
(51) Int. Cl.: B23C 5/10

(54) **ENDMILL**
SCHAFTFRÄSER
FRAISE EN BOUT

(30) Priority: 14.02.2019 JP 2019024409
(43) Date of publication of application: 22.12.2021
(73) Proprietor: MOLDINO Tool Engineering, Ltd., Tokyo 130-0026 (JP)
(72) Inventor: BABA, Makoto, Yasu-shi, Shiga 520-2323 (JP); SAI, Takafumi, Yasu-shi, Shiga 520-2323 (JP); TOKUYAMA, Akira, Yasu-shi, Shiga 520-2323 (JP)
(74) Representative: Hoffmann Eitle
(86) International application number: PCT/JP2020/004028
(87) International publication number: WO 2020/166421

(56) References cited:
- CN-A- 109 262 038
- JP-A- 2010 520 064
- JP-A- 2011 056 608
- JP-A- 2011 056 608
- JP-A- 2011 183 532
- JP-A- 2011 189 463
- JP-A- H11 156 620
- JP-A- H11 165 212
- US-A1- 2018 169 773

## Description

### [Technical Field]

The present invention relates to an endmill.

### [Background Art]

As an endmill used for cutting a mold or the like using a 3-axis machine, for example, a ball endmill as described in Japanese Unexamined Patent Application, First Publication No. H5-337718 is generally known. Such a ball endmill includes a bottom edge located at a leading end and having a hemispherical rotation trajectory and a spiral outer circumferential edge connected to the bottom edge. JP H-11 156620 A discloses an endmill having a profile inscribing a sphere on one end of a main body, and a shank on another end, wheein the circular arc radius of a cutting blade is 0.6-1.5 times the end mill diameter.

### [Summary of Invention]

### [Technical Problem]

When a flat surface orthogonal to an axial line is processed using a ball endmill in the related art, it is possible to reduce a step height between pick feeds (hereinafter referred to as a "cusp height") using a large-diameter ball endmill and it is possible to improve the processed surface roughness. However, if the outer diameter of the ball endmill is increased, a large machine tool is required and there is a problem that the processing cost increases.

The present invention was made under such a background, and an object of the present invention is to provide an endmill capable of forming a flat surface in which the cusp height is minimized while processing costs are minimized.

### [Solution to Problem]

According to the invention, there is provided an endmill according to claim 1.

According to the endmill having the above constitution, the curvature radius of the rotation trajectory of the circular-arc-shaped cutting edge provided at the leading end is larger than 1/2 of the outer diameter of the endmill body. For this reason, it is possible to reduce the cusp height when the flat surface orthogonal to the axial line with the same pick feed is formed while the outer diameter of the endmill body is decreased when compared with an endmill in the related art in which a radius of the rotation trajectory of a cutting edge is equal to 1/2 of the outer diameter of an endmill body. Therefore, according to the above constitution, it is possible to improve the surface roughness of a processed surface by minimizing the cusp height while processing costs are minimized by reducing the size of the endmill and utilizing a relatively small machine tool.

Also, according to the endmill having the above constitution, the plurality of cutting edges at the leading end include the plurality of long cutting edgelong cutting edges and the short cutting edges arranged between the long cutting edgelong cutting edges. For this reason, it is possible to reduce the amount of cutting of each of the cutting edges and it is possible to minimize the occurrence of shaving on the processed surface formed using the endmill.

Furthermore, according to the endmill having the above constitution, the tip of the cutting edge is significantly curved in a convex shape toward a side in the rotational direction when viewed in a plan view. To be more specific, the maximum projection dimension toward the side in the rotational direction with respect to the virtual line connecting both radial ends of the tip is curved in a convex shape forward in the rotational direction to be 3% or more and 4% or less of the outer diameter of the endmill body. For this reason, each of the cutting edges can quickly discharge chips radially outward. That is to say, according to the above constitution, it is possible to improve the chip discharge performance of the endmill. Moreover, when the tip is curved in a convex shape forward in the rotational direction, it is possible to minimize the occurrence of chattering vibration at the tip at the time of cutting.

A bottom surface of each of the gashes directed toward the leading-end side is inclined at 40° or more and 50° or less with respect to a plane orthogonal to the axial line is provided.

According to the endmill having the above constitution, since the bottom surface of the gash is inclined at 40° or more, it is possible to smoothly discharge chips.

Also, according to the endmill having the above constitution, since the bottom surface of the gash is at 50° or less, it is possible to sufficiently secure the rigidity of the endmill and minimize the vibration and the breakage of the endmill during processing.

In the above endmill, a constitution in which a distance between a radial inner end of each of the short cutting edges and the axial line when viewed in a plan view is 4% or more and 9% or less of the outer diameter of the endmill body may be provided.

According to the endmill having the above constitution, the distance between the radial inner end of the short cutting edge and the axial line when viewed in a plan view is 4% or more of the outer diameter of the endmill body. That is to say, according to the above constitution, since the start position of the short cutting edge is sufficiently far from the axial line, it is possible to sufficiently secure the central pocket and minimize the chip clogging.

Also, according to the endmill having the above constitution, the distance between the radial inner end of the short cutting edge and the axial line when viewed in a plan view is 9% or less of the outer diameter of the endmill body. If the start position of the short cutting edge is too far from the axial line, a region to be cut using only the long cutting edgelong cutting edge becomes wide in the rotation trajectory of the cutting edge and a load on the long cutting edgelong cutting edge becomes large. Thus, there is a concern concerning the occurrence of damage to the long cutting edgelong cutting edge. That is to say, according to the above constitution, it is possible to minimize damage of the long cutting edgelong cutting edge.

In the above endmill, a constitution in which each of the long cutting edgelong cutting edges includes: the tip provided on a leading-end ridge in the rotational direction; a first flank surface adjacent to the rear of the tip in the rotational direction; and a second flank surface adjacent to the rear of the first flank surface in the rotational direction, wherein the distance between a radial inner end of the second flank surface and the axial line in the long cutting edgelong cutting edge when viewed in a plan view is 10% or more and 20% or less of the outer diameter of the endmill body may be provided.

According to the endmill having the above constitution, when the start position of the second flank surface is sufficiently far from the axial line, it is possible to sufficiently secure the width of the first flank surface (that is, the edge thickness). As a result, it is possible to sufficiently secure the rigidity of the endmill. On the other hand, if the start position of the second flank surface is too far from the axial line, production thereof becomes difficult. That is to say, according to the endmill having the above constitution, when the start position of the second flank surface is not too far from the axial line, producing can be easily performed.

In the above endmill, a constitution in which, when viewed in a plan view, an angle formed by the radial inner end of the short cutting edge and the radial inner end of the second flank surface of the long cutting edgelong cutting edge about the axial line is 40° or more and 60° or less may be provided.

According to the endmill having the above constitution, when viewed in a plan view, the angle formed by the radial inner end of the short cutting edge and the radial inner end of the second flank surface of the long cutting edgelong cutting edge about the axial line is 40° or more. For this reason, it is possible to sufficiently secure a space in front of the long cutting edgelong cutting edge in the rotational direction in the vicinity of the axial line and minimize the chip clogging.

Also, according to the endmill having the above constitution, when viewed in a plan view, the angle formed by the radial inner end of the short cutting edge and the radial inner end of the second flank surface of the long cutting edgelong cutting edge about the axial line is 60° or less. For this reason, it is possible to sufficiently secure the width of the first flank surface of the long cutting edgelong cutting edge (that is, the edge thickness) in the vicinity of the axial line, sufficiently secure the rigidity of the long cutting edgelong cutting edge, and minimize the vibration of the long cutting edgelong cutting edge.

In the above endmill, a constitution in which the endmill includes: the tip provided on a leading-end ridge in the rotational direction; a first flank surface adjacent to the rear of the tip in the rotational direction; a second flank surface adjacent to the rear of the first flank surface in the rotational direction, wherein the distance between a radial inner end of the second flank surface and the axial line in the short cutting edge when viewed in a plan view is 20% or more and 30% or less may be provided.

According to the endmill having the above constitution, when the start position of the second flank surface is far to be sufficiently far from the axial line, it is possible to sufficiently secure the width of the first flank surface (that is, the edge thickness). As a result, it is possible to sufficiently secure the rigidity of the endmill. On the other hand, if the start position of the second flank surface is too far from the axial line, producing becomes difficult. That is to say, according to the endmill having the above constitution, when the start position of the second flank surface is not too far from the axial line, producing can be easily performed.

### [Advantageous Effects of Invention]

As described above, according to the present invention, it is possible to provide an endmill capable of forming a flat surface in which the cusp height is minimized while processing costs are minimized.

### [Brief Description of Drawings]

Fig. 1 is a plan view of an endmill in an embodiment.
Fig. 2 is a side view of the endmill in the embodiment.
Fig. 3 is a side view of an endmill 1 in the embodiment when viewed in a direction orthogonal to that of Fig. 2.

### [Description of Embodiments]

An endmill according to an embodiment of the present invention will be described below with reference to the drawings.

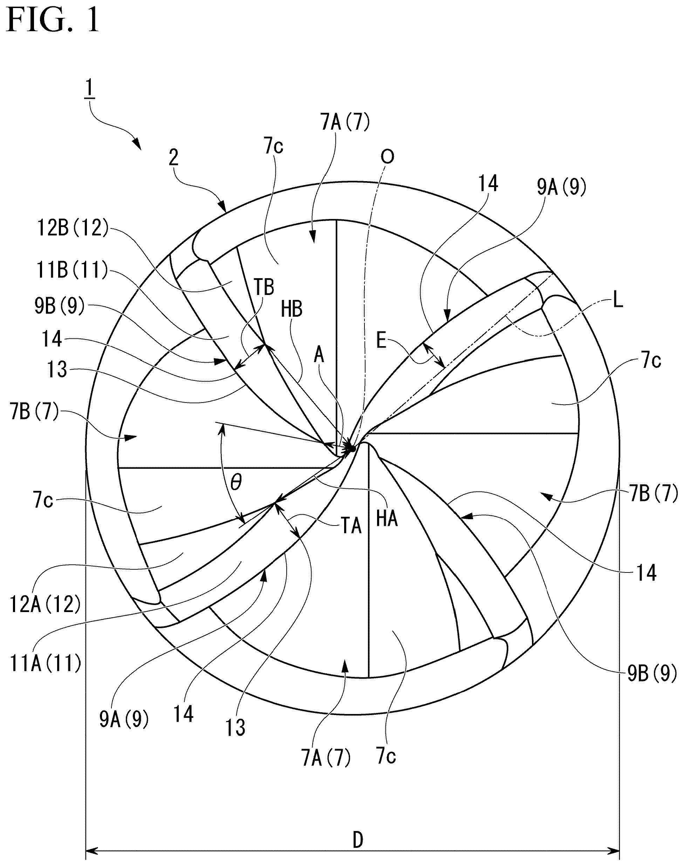

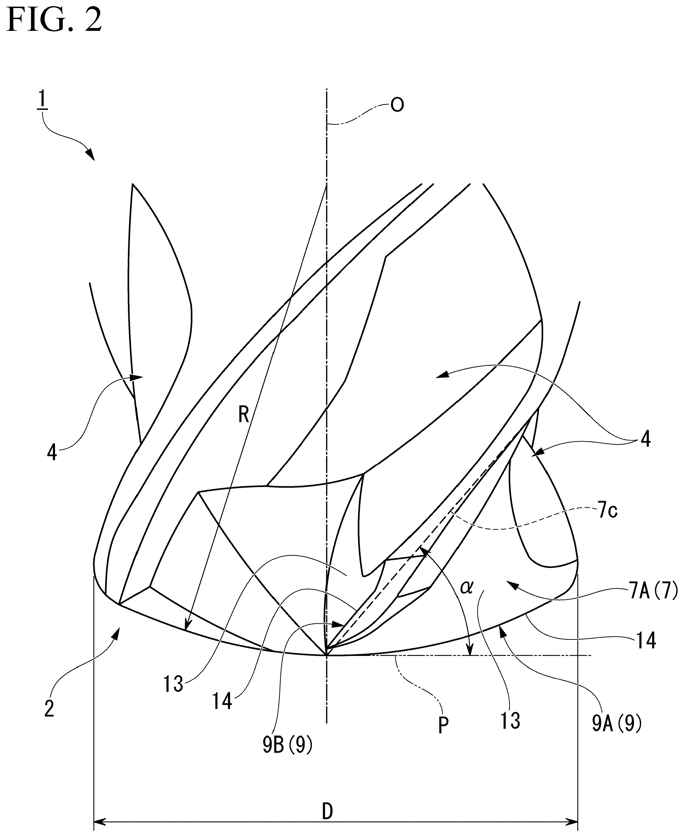

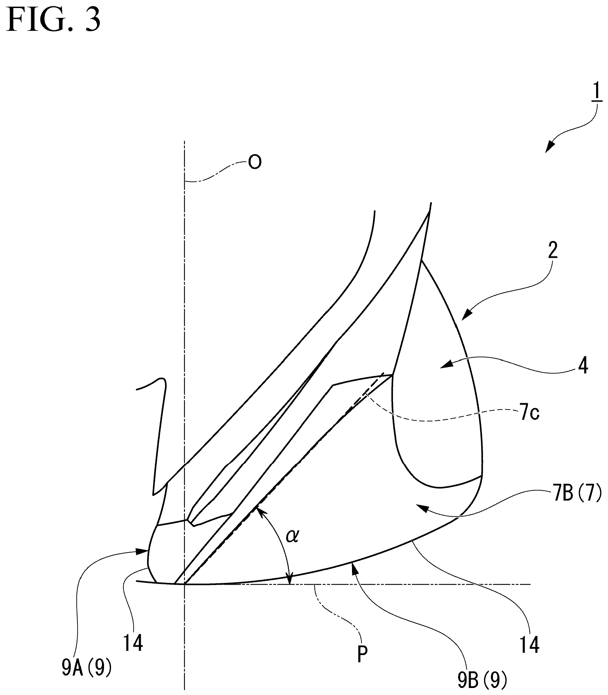

Fig. 1 is a plan view of an endmill 1 in the embodiment. Figs. 2 and 3 are side views of the endmill 1 when viewed in directions orthogonal to each other.

The endmill 1 in the embodiment is a cutting tool (a rolling tool) configured to subject a material to be cut made of a metal material or the like to, for example, cutting processing (rolling processing) such as finishing processing and semi-finishing processing.

The endmill 1 in the embodiment includes a shaft-shaped endmill body 2 extending along an axial line O and a plurality of cutting edges 9 provided at a leading end of the endmill body 2.

The endmill body 2 is made of, for example, cemented carbide, high-speed tool steel, or the like. A shank portion (not shown) is provided on a base end side of the endmill body 2. The shank portion is attached to a main shaft of a machine tool such as a machining center. The endmill body 2 is rotated around the axial line O using the machine tool. The endmill 1 subjects the material to be cut to cutting processing by forming a notch in a direction of the axial line O and performs feeding in a radial direction orthogonal to the axial line O along with the above rotation and cutting a material to be cut. The endmill 1 in the embodiment is mainly used for processing a plane orthogonal to that of the axial line O. Furthermore, the endmill 1 can be used for subjecting a material to be cut to, for example, various processing such as curved surface processing, pocket processing, deep digging processing, R processing (convex R; concave R), and chamfering processing.

In this specification, the direction orthogonal to that of the axial line O is referred to as a "radial direction." A direction in the radial direction toward the axial line O is referred to as "radially inward" and a direction in the radial direction away from the axial line O is referred to as "radially outward." Furthermore, a direction about the axial line O is referred to as a "circumferential direction." In this specification, a direction in the circumferential direction in which the endmill body 2 is rotated based on the main shaft of the machine tool at the time of cutting is referred to as an "endmill rotational direction T." Furthermore, in the specification, a region on the endmill rotational direction T side with respect to a specific portion may be referred to as a "front side in the rotational direction" and a region on a side opposite to the endmill rotational direction T side may be referred to as a "rear side in the rotational direction" in some cases.

Also, in this specification, "when viewed in a plan view" corresponds to when viewed in an axial direction of the axial line O as illustrated in Fig. 1, and as illustrated in Figs. 2 and 3, "when viewed in a side view" corresponds to when viewed in a direction orthogonal to the axial direction.

As illustrated in Fig. 2, a plurality of chip discharge grooves 4 are formed in the outer circumference of the endmill body 2 at intervals in the circumferential direction. In the embodiment, these chip discharge grooves 4 are arranged at equal intervals in the circumferential direction. In an example of the embodiment, four chip discharge grooves 4 are formed in the outer circumference of the endmill body 2.

Each of the chip discharge grooves 4 extends in the circumferential direction from a leading end of the endmill body 2 in the direction of the axial line O toward the base end side. In the embodiment, the chip discharge groove 4 opens toward the leading-end side of the endmill body 2, gradually twists toward a side opposite to the endmill rotational direction T from the leading-end side toward the base end side, and extends in a spiral shape. The chip discharge groove 4 is cut in the outer circumference of the endmill body 2 at an end portion of the endmill body 2 on the base end side.

As illustrated in Fig. 1, a plurality of groove-shaped gashes 7 are provided at the leading end of the endmill body 2. Each of the gashes 7 extends in the radial direction. Furthermore, the plurality of gashes 7 are arranged in the circumferential direction. An end portion of the gash 7 on the radial inner side is disposed in the vicinity of the axial line O. The gash 7 gradually extends toward the base end side in direction of the axial line O from the end portion on the radial inner side toward the radial outer side.

The number of gashes 7 corresponds to the number of chip discharge grooves 4. In an example of the embodiment, four gashes 7 are provided in the endmill body 2. These gashes 7 include a plurality of types of gashes 7A and 7B in accordance with types of cutting edges 9 which will be described later (a long cutting edgelong cutting edge 9A and a short cutting edge 9B). Details of the gashes 7A and 7B will be describe later.

The plurality of cutting edges 9 are arranged at the leading end of the endmill body 2 at intervals in the circumferential direction. The number of cutting edges 9 corresponds to the number of gashes 7, and in an example of the embodiment, four cutting edges 9 are provided. That is to say, the endmill 1 in the embodiment is an endmill having four edges.

The cutting edges 9 are provided at leading-end side ridges of wall surfaces of the gashes 7 which are directed in the endmill rotational direction T. The plurality of (four in an example of the embodiment) cutting edges 9 are arranged at the leading end of the endmill body 2 in the direction of the axial line O at intervals about the axial line O.

As illustrated in Fig. 2, each of the cutting edges 9 is a ball edge having a circular-arc shape in which the ball edge is convex toward the outer circumferential side of the leading end of the endmill body 2 when viewed in a side view. The rotation trajectory about the axial line O of the cutting edge 9 is a circular-arc shape in which the leading-end side of which a circular-arc center is located on the axial line O is convex when viewed in a side view. A curvature radius R of the rotation trajectory of the cutting edge 9 is larger than 1/2 of an outer diameter D of the endmill body 2. The outer diameter D of the endmill body 2 means a tool diameter D of the endmill. If the curvature radius R of the rotation trajectory of the cutting edge 9 becomes too large, the producing of the endmill 1 is difficult. Thus, it is preferable that the curvature radius R of the rotation trajectory of the cutting edge 9 be 3 times or less the outer diameter D of the endmill body 2.

According to the endmill 1 in the embodiment, the curvature radius R of the rotation trajectory of the circular-arc-shaped cutting edge 9 provided at the leading end is larger than 1/2 of the outer diameter D of the endmill body 2. For this reason, it is possible to reduce the cusp height when the flat surface orthogonal to the axial line O with the same pick feed is formed while the outer diameter D of the endmill body 2 is decreased when compared with an endmill in the related art in which the radius of the rotation trajectory of a cutting edge is equal to 1/2 of the outer diameter of an endmill body. Therefore, according to the above constitution, it is possible to improve the surface roughness of a processed surface by minimizing the cusp height while processing costs are minimized by reducing the size of the endmill 1 and utilizing a relatively small machine tool.

The curvature radius R of the rotation trajectory of the cutting edge 9 in the embodiment is substantially equal to the diameter of the endmill body 2. It is possible to more sufficiently obtain the above effects by adopting such a curvature radius R of the cutting edge 9.

As illustrated in Fig. 1, the cutting edge 9 has a tip 14, a rake surface 13, a first flank surface 11, and a second flank surface 12. The cutting edge 9 is provided at a leading end ridge between the rake surface 13 and the first flank surface 11 in the rotational direction.

In the plan view illustrated in Fig. 1, the tip 14 of the cutting edge 9 is curved in a convex shape toward a side in the rotational direction. For this reason, each of the cutting edges 9 can quickly cause chips to be discharged outward in the radial direction. That is to say, according to the above constitution, it is possible to improve the chip discharge performance of the endmill. In addition, it is possible to minimize the occurrence of chattering vibration in the tip 14 at the time of cutting by curving the tip 14 in a convex shape forward in the rotational direction.

As illustrated in Fig. 1, furthermore, a virtual line L connecting both radial ends of the tip 14 is assumed. It is preferable that the tip 14 have a maximum projection dimension E toward a side in the rotational direction with respect to the virtual line L of 3% or more and 4% or less of the outer diameter D of the endmill body 2. When the maximum projection dimension E of the tip 14 is set to 3% or more, it is possible to improve the chip discharge performance as described above by sufficiently increasing the curvature of the tip 14. In addition, when the curvature of the tip 14 is sufficiently increased, cutting resistance can be reduced and the vibration of the tip 14 can be minimized. On the other hand, if the maximum projection dimension E of the tip 14 exceeds 4%, the molding of the tip 14 is difficult. That is to say, according to the embodiment, when the maximum projection dimension E of the tip 14 is set to be 4% or less, it is possible to easily produce the endmill 1 and it is possible to provide an inexpensive endmill 1.

As will be described later, in the endmill 1 in the embodiment, four cutting edges 9 include two long cutting edgelong cutting edges 9A and two short cutting edges 9B. In the embodiment, maximum projection dimensions E of all of the cutting edges 9 (that is, the long cutting edgelong cutting edges 9A and the short cutting edges 9B) are equal to each other. However, the maximum projection dimensions E of the long cutting edgelong cutting edges 9A and the maximum projection dimensions E of the short cutting edges 9B may be different from each other as long as the maximum projection dimensions E are values within the above range.

The rake surface 13 is located on a leading-end side distal end on a wall surface of the gash 7 directed in the endmill rotational direction T. The rake surface 13 is adjacent to the front side in the rotational direction of the tip 14.

The first flank surface 11 and the second flank surface 12 are arranged between the gashes 7 in the circumferential direction on a leading end surface of the endmill body 2. The first flank surface 11 is adjacent to a side of the gash 7 opposite to the endmill rotational direction T. The first flank surface 11 is adjacent behind the tip 14 in the rotational direction. The second flank surface 12 is adjacent further behind the first flank surface 11 in the rotational direction.

The first flank surface 11 and the second flank surface 12 are inclined at prescribed clearance angles from the tip 14 toward the base end side toward the rear side in the rotational direction. The clearance angle of the second flank surface 12 is larger than the clearance angle of the first flank surface 11.

As illustrated in Fig. 1, the plurality of cutting edges 9 include the plurality of long cutting edges 9A arranged at equal intervals in the circumferential direction and the short cutting edge 9B arranged between the long cutting edges 9A in the circumferential direction. The long cutting edges 9A and the short cutting edges 9B have edge lengths different from each other.

An edge length of each of the long cutting edges 9A directed inward in the radial direction is longer than that of each of the short cutting edges 9B. A leading end of the long cutting edge 9A on the radial inner side is arranged at a position in which the leading end is beyond the axial line O. That is to say, a leading end of the long cutting edge 9A in an edge length direction in which the leading end extends toward the radial inner side reaches the axial line O and extends to a leading portion of the axial line O. In the embodiment, the tips 14 of the long cutting edges 9A do not pass directly above the axial line O and the two long cutting edges 9A are arranged to have the axial line O therebetween and to pass each other.

The short cutting edge 9B has an edge length inward in the radial direction shorter than that of the long cutting edge 9A. A leading end of the short cutting edge 9B in the edge length direction is arranged at a position in which the leading end is not beyond the axial line O. That is to say, a leading end of the short cutting edge 9B in the edge length direction in which the leading end extends toward the radial inner side does not reach the axial line O.

In the embodiment, two sets of the long cutting edges 9A and the short cutting edges 9B are provided 180° rotationally symmetrically about the axial line O.

According to the endmill 1 in the embodiment, the plurality of cutting edges 9 at the leading end include the plurality of long cutting edges 9A and the short cutting edges 9B arranged between the long cutting edges 9A. For this reason, it is possible to reduce the amount of cutting of each of the cutting edges 9 and it is possible to minimize the occurrence of shaving on the processed surface formed using the endmill 1 when compared with an endmill having only long cutting edges provided therein.

As illustrated in Fig. 1, a distance between a radial inner end of the short cutting edge 9B and the axial line O when viewed in a plan view is assumed as a short cutting edge start dimension A. In the embodiment, the short cutting edge start dimension A is preferably 4% or more and 9% or less of the outer diameter D of the endmill body 2.

The clogging of chips cut by the long cutting edges 9A easily occurs in the vicinity of the axial line O at the leading end of the endmill body 2. When the short cutting edge start dimension A is set to 4% or more of the outer diameter D of the endmill body 2, the radial inner end of the short cutting edge 9B can be sufficiently far from the axial line O and a central pocket in the vicinity of the axial line O can be sufficiently secured so that the chip clogging can be minimized.

Also, if a start position of the short cutting edge 9B is too far from the axial line O, a region to be cut by only the long cutting edge 9A becomes wide in the rotation trajectory of the cutting edge 9 and thus a load of the long cutting edge 9A becomes too large. Therefore, there is a concern concerning damage occurring in the long cutting edge 9A. When the short cutting edge start dimension A is set to 90% or less of the outer diameter D of the endmill body 2, it is possible to minimize damage of the long cutting edge 9A by reducing a load of the long cutting edge 9A.

As described above, the long cutting edge 9A and the short cutting edge 9B have the first flank surface 11 and the second flank surface 12 having different shapes. That is to say, the long cutting edge 9A has the first flank surface 11A and the second flank surface 12A and the short cutting edge 9B has the first flank surface 11B and the second flank surface 12B.

A distance HA in the long cutting edge 9A between the radial inner end of the second flank surface 12A and the axial line O when viewed in a plan view is preferably 10% or more and 20% or less of the outer diameter D of the endmill body 2.

When a start position of the second flank surface 12A in the long cutting edge 9A is far from the axial line O by 10% or more of the outer diameter D, it is possible to sufficiently secure a width TA of the first flank surface 11A. As a result, it is possible to sufficiently secure the rigidity of the long cutting edge 9A by increasing an edge thickness of the long cutting edge 9A. On the other hand, if the start position of the second flank surface 12A is too far from the axial line O, producing becomes difficult. That is to say, when the start position of the second flank surface 12A is set to 20% or less of the outer diameter D from the axial line O, it is possible to easily produce the endmill 1.

A distance HB in the short cutting edge 9B between the radial inner end of the second flank surface 12B and the axial line O when viewed in a plan view is preferably 20% or more and 30% or less of the outer diameter D of the endmill body 2.

When a start position of the second flank surface 12B in the short cutting edge 9B is far from the axial line O by 20% or more of the outer diameter D, it is possible to sufficiently secure a width TB of the first flank surface 11B. As a result, it is possible to sufficiently secure the rigidity of the short cutting edge 9B by increasing an edge thickness of the short cutting edge 9B. On the other hand, if the start position of the second flank surface 12B is too far from the axial line O, producing becomes difficult. That is to say, when the start position of the second flank surface 12B is set to 30% or less of the outer diameter D from the axial line O, it is possible to easily produce the endmill 1.

As illustrated in Fig. 1, when viewed in a plan view, an angle formed by the radial inner end of the short cutting edge 9B and the radial inner end of the second flank surface 12A of the long cutting edge 9A about the axial line O is defined as a gash opening angle θ.

The gash opening angle θ is preferably 40° or more and 60° or less.

When the gash opening angle θ is set to 40° or more, it is possible to minimize the chip clogging by sufficiently securing a space in the vicinity of the axial line O in front of the long cutting edge 9A in the rotational direction. Furthermore, when the gash opening angle θ is set to 60° or less, it is possible to sufficiently secure the width of the first flank surface 11A of the long cutting edge 9A in the vicinity of the axial line O, minimize the vibration of the long cutting edge 9A by increasing the edge thickness of the long cutting edge 9A to sufficiently secure the rigidity of the long cutting edge 9A, and minimize the deterioration of the surface texture of the processed surface caused by the vibration.

At the leading end of the endmill body 2, the gashes 7 are disposed adjacent to the fronts of the plurality of cutting edges 9 in the rotational direction. The plurality of gashes 7 include a plurality of types of gashes having lengths (groove lengths) different from each other. To be specific, the plurality of gashes 7 include the gash 7A of the long cutting edge 9A and the gash 7B of the short cutting edge 9B.

In the embodiment, two sets of the gash 7A of the long cutting edge 9A and the gash 7B of the short cutting edge 9B are provided 180° rotationally symmetrically about the axial line O. When the endmill body 2 is viewed in a plan view, a length of the gash 7B of the short cutting edge 9B is shorter than that of the gash 7A of the long cutting edge 9A.

Fig. 2 includes the gash 7A of the long cutting edge 9A illustrated therein. Furthermore, Fig. 3 includes the gash 7B of the short cutting edge 9B illustrated therein. As illustrated in Figs. 2 and 3, the gashes 7A and 7B have bottom surfaces 7c directed toward the leading-end side in the axial direction. In both of the gash 7A of the long cutting edge 9A and the gash 7B of the short cutting edge 9B, each of the bottom surfaces 7c of the gashes 7 is inclined at an inclination angle α with respect to a virtual plane P orthogonal to the axial line O. The inclination angle α is preferably 40° or more and 50° or less. When the inclination angle α of the bottom surface 7c is set to 40° or more, it is possible to smoothly cut chips using the cutting edge 9. Furthermore, when the inclination angle α of the bottom surface 7c is set to 50° or less, it is possible to minimize the vibration and the breakage of the endmill at the time of processing by sufficiently securing the rigidity of the endmill 1.

### [Examples]

The effects associated with each constitution of the present invention will be demonstrated below by exemplifying examples of the present invention.

In this example, a plurality of samples shown in Table 1 which will be shown later were produced on the basis of the above embodiment. Each endmill sample had a tool diameter D of 10 mm, a curvature radius R of the rotation trajectory of a cutting edge of 10 mm, and different parameters. Furthermore, each endmill sample corresponded to four edges including two long cutting edges 9A and two short cutting edges 9B.

In this example, contour processing was performed on a plane orthogonal to a tool axis using various endmill samples under the following processing conditions and processed surface roughness (arithmetic mean roughness Ra (µm) and maximum height Rz (µm)) of the cut surface (the processed surface) at this time in a feeding direction and an axial direction was measured. The measurement results are summarized in Table 1 which will be shown later.

Table 1 shows the implementation results of an endmill in the related art in which 1/2 of a tool diameter coincides with a curvature radius of the rotation trajectory of a cutting edge. The endmill in the related art corresponded to an endmill having two edges.

### <Processing condition>

· Material to be cut: manufactured by Hitachi Metal Tool Steel Co., Ltd.; DAC (a material equivalent to JIS G4404 SKD61; hardness 43 HRC)
· Machine: Okuma Corporation; HSK-A63
· Cutting conditions: number of revolutions n=8800 rotation/min
   Feeding rate Vf=2220 mm/min
   Pick feed 0.2 mm
   Machining allowance 0.1 mm
   Wet processing in which soluble cutting fluid is used

**[Table 1]**

| | Sample characteristics | | | | | | | Evaluation | | | |
|---|---|---|---|---|---|---|---|---|---|---|---|
| | Tool diameter D (mm) | Rotational trajectory of cutting edge R (mm) | Gash bottom inclination angle α (°) | Gash opening angle θ (°) | Start position of short cutting edge A (mm) | Start position of second flank surface of long cutting edge HA (mm) | Maximum projection dimension E (mm) | Arithmetic mean roughness Ra (µm) | Maximum height Rz (µm) | Comprehensive evaluation | Remarks |
| Reference sample | 10 | 10 | 45 | 50 | 0.6 | 1.5 | 0.35 | 0.07 | 0.74 | | Ensuring performance in middle of target value |
| Sample A-1 | 10 | 10 | 30 | 50 | 0.6 | 1.5 | 0.35 | 0.22 | 1.7 | × | Occurrence of chip clogging |
| Sample A-2 | 10 | 10 | 40 | 50 | 0.6 | 1.5 | 0.35 | 0.11 | 1.02 | ○ | |
| Sample A-3 | 10 | 10 | 50 | 50 | 0.6 | 1.5 | 0.35 | 0.09 | 0.92 | ○ | |
| Sample A-4 | 10 | 10 | 60 | 50 | 0.6 | 1.5 | 0.35 | 0.16 | 1.75 | 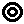 × | Reduced cutting edge rigidity |
| Sample B-1 | 10 | 10 | 45 | 35 | 0.6 | 1.5 | 0.35 | 0.18 | 2.2 | × | Occurrence of chip clogging |
| Sample B-2 | 10 | 10 | 45 | 40 | 0.6 | 1.5 | 0.35 | 0.09 | 0.96 | ○ | |
| Sample B-3 | 10 | 10 | 45 | 60 | 0.6 | 1.5 | 0.35 | 0.1 | 1.22 | ○ | |
| Sample B-4 | 10 | 10 | 45 | 65 | 0.6 | 1.5 | 0.35 | 0.16 | 1.82 | × | Edge width is thin and rigidity is reduced |
| Sample C-1 | 10 | 10 | 45 | 50 | 0 | 1.5 | 0.35 | 0.22 | 2.4 | × | Short cutting edges connected and occurrence of chip clogging |
| Sample C-2 | 10 | 10 | 45 | 50 | 0.35 | 1.5 | 0.35 | 0.18 | 1.63 | × | Narrow central pocket and occurrence of chip clogging |
| Sample C-3 | 10 | 10 | 45 | 50 | 0.4 | 1.5 | 0.35 | 0.08 | 0.88 | ○ | |
| Sample C-4 | 10 | 10 | 45 | 50 | 0.9 | 1.5 | 0.35 | 0.09 | 1.04 | ○ | |
| Sample C-5 | 10 | 10 | 45 | 50 | 1.2 | 1.5 | 0.35 | 0.11 | 0.98 | × | Wide two-edge range and there is concern concerning damage |
| Sample D-1 | 10 | 10 | 45 | 50 | 0.6 | 0.8 | 0.35 | 0.19 | 1.87 | × | Thin edge width and reduced rigidity |
| Sample D-2 | 10 | 10 | 45 | 50 | 0.6 | 1 | 0.35 | 0.1 | 1.04 | | |
| Sample D-3 | 10 | 10 | 45 | 50 | 0.6 | 2 | 0.35 | 0.1 | 1.12 | ○ | |
| Sample D-4 | 10 | 10 | 45 | 50 | 0.6 | 2.2 | 0.35 | 0.18 | 1.99 | ○ × | Difficult producing |
| Sample E-1 | 10 | 10 | 45 | 50 | 0.6 | 1.5 | 0.25 | 0.2 | 2.34 | × | Occurrence of chatter vibration |
| Sample E-2 | 10 | 10 | 45 | 50 | 0.6 | 1.5 | 0.3 | 0.1 | 1.17 | ○ | |
| Sample E-3 | 10 | 10 | 45 | 50 | 0.6 | 1.5 | 0.4 | 0.13 | 1.33 | ○ | |
| Sample E-4 | 10 | 10 | 45 | 50 | 0.6 | 1.5 | 0.45 | - | - | × | Difficult producing |
| Endmill in related art | 10 | 5 | - | - | - | - | - | 0.24 | 1.5 | × | High cusp height |

A reference sample of the samples was a sample in which each parameter value was a median value of the range. It was confirmed that the reference sample was sufficiently minimized with both of the arithmetic mean roughness Ra and the maximum height Rz.

Since a processing target in this example was for a mold, the processed surface was evaluated as a preferable range of the surface texture having an arithmetic mean roughness Ra of 0.15 µm or less and a maximum height Rz of 1.5 µm or less.

Samples A-1 to A-4 corresponded to a group of samples having inclination angles α of gash bottom surfaces (Figs. 2 and 3) which were variously changed.

In the processing using endmills which were Samples A-2 and A-3, the surface roughness could be kept within a preferable range. On the other hand, in the processing using the endmill which was Sample A-1, it is considered that the inclination angle α was too small so that the chip clogging occurred at the time of cutting and the surface texture of the processed surface deteriorated. Furthermore, in the processing using the endmill which is Sample A-4, it is considered that the rigidity of the tip was reduced and the surface texture deteriorated due to an influence of vibration because the inclination angle α is large and the gashes were too wide.

Samples B-1 to B-4 corresponded to a group of samples having gash opening angles θ (Fig. 1) which were variously changed.

In the processing using the endmills which were Samples B-2 and B-3, the surface roughness could be kept within a preferable range. On the other hand, in the processing using the endmill which was Sample B-1, it is considered that the gash opening angle θ was too small so that the chip clogging occurred at the time of cutting and the surface texture of the processed surface deteriorated. Furthermore, in the processing using the endmill which was Sample B-4, it is considered that the gash opening angle θ was too large so that the width of the width edge of the cutting edge 9 was reduced and thus the rigidity of the tip was reduced and the surface texture deteriorated due to an influence of vibration.

Samples C-1 to C-5 corresponded to a group of samples having short cutting edge start dimensions A (Fig. 1) which were variously changed.

In the processing using endmills which were Samples C-3 and C-4, the surface roughness could be kept within a preferable range. On the other hand, the start position of the short cutting edge 9B of the endmill which was Sample C-1 coincided with an axial line O. In the processing using the endmill which was Sample C-1, since a pair of short cutting edges 9B were connected to each other on the axial line O, it is considered that the chip clogging occurred at the time of cutting and the surface texture of the processed surface deteriorated. In the processing using the endmill which was Sample C-2, it is considered that the width of a pocket in the vicinity of the axial line O was reduced so that the chip clogging occurred at the time of cutting and the surface texture of the processed surface deteriorated. Furthermore, in the process using the endmill which was Sample C-5, a region to be cut using only the long cutting edge 9A became wide and there was a concern concerning damage of the long cutting edge 9A which occurred. For this reason, although the deterioration of the surface texture was observed, the endmill which was Sample C-5 was evaluated as ×.

Samples D-1 to D-4 corresponded to a group of samples having distances HA (Fig. 1) between a start position of a second flank surface 12A of the long cutting edge 9A and an axial line O which were variously changed.

In the processing using endmills which were Samples D-2 and D3, the surface roughness could be kept within a preferable range. On the other hand, in the processing using the endmill which was Sample D-1, it is considered that the surface texture deteriorated due to an influence of vibration because the edge thickness of the long cutting edge 9A decreased and the rigidity of the long cutting edge 9A decreased because the distance HA was too small. Furthermore, in the process using the endmill which was Sample D-4, it is considered the surface texture deteriorated due to an influence of vibration because the start position of the second flank surface 12A of the long cutting edge 9A was too far from the axial line O. Moreover, producing of the endmill which was Sample D-4 becomes difficult and the endmill becomes expensive.

Samples E-1 to E4 corresponded to a group of samples having maximum projection dimensions E (Fig. 1) which were variously changed.

In the processing using endmills which were Samples E-2 and E3, the surface roughness could be kept within a preferable range. On the other hand, in the processing using the endmill which was Sample E-1, it is considered that the cutting resistance was increased due to the insufficient curvature of the tip 14 and the surface texture deteriorated due to an influence of vibration. Furthermore, in the process using the endmill which was Sample E-4, the curvature of the tip was too large to produce. For this reason, the endmill which was Sample E-4 was evaluated as ×.

The present invention is not limited to the embodiments.

### [Reference Signs List]

1 Endmill
2 Endmill body
7, 7A, 7B Gash
7c Bottom surface
9 Cutting edge
9A Long cutting edge
9B Sort cutting edge
11, 11A, 11B First flank surface
12, 12A, 12B Second flank surface
14 Tip
D Outer diameter
E Maximum projection dimension
HA, HB Distance
L Virtual line
O Axial line
R Curvature radius
T Endmill rotational direction

## Claims

1. An endmill (1) comprising:
an endmill body (2) having a shaft shape in which the endmill body is rotated around an axial line (O) and including a plurality of gashes (7,7A,7B) which extend from a leading end in a radial direction and are arranged in a circumferential direction; and
a plurality of cutting edges (9,9A,9B) provided on leading-end side ridges of wall surfaces of the gashes directed in an endmill rotational direction,
wherein a rotation trajectory of each of the cutting edges has a circular-arc shape in which a leading-end side of which a circular-arc center is located on the axial line (O) is convex when viewed in a side view,
a curvature radius (R) of the rotation trajectory of each of the cutting edges is larger than 1/2 of an outer diameter of the endmill body,
a tip (14) of each of the cutting edges is curved in a convex shape toward a side in the rotational direction when viewed in a plan view and a maximum projection dimension toward the side in the rotational direction with respect to a virtual line connecting both radial ends of the tip is 3% or more and 4% or less of the outer diameter of the endmill body, and
the plurality of cutting edges include a plurality of long cutting edges (9A) arranged at equal intervals in the circumferential direction and short cutting edges (9B) arranged between the long cutting edges in the circumferential direction and having a length shorter than that of the long cutting edges,
wherein a bottom surface (7c) of each of the gashes directed toward the leading-end side is inclined at 40° or more and 50° or less with respect to a plane orthogonal to the axial line.

2. The endmill according to claim 1, wherein a distance between a radial inner end of each of the short cutting edges and the axial line when viewed in a plan view is 4% or more and 9% or less of the outer diameter of the endmill body.

3. The endmill according to any one of claims 1 or 2, wherein each of the long cutting edges (9,9A,9B) includes:
the tip (14) provided on a leading-end ridge in the rotational direction;
a first flank surface (11,11a,11B) adjacent to the rear of the tip in the rotational direction; and
a second flank surface (12,12A,12B) adjacent to the rear of the first flank surface in the rotational direction, and
wherein a distance between a radial inner end of the second flank surface of the long cutting edge and the axial line when viewed in a plan view is 10% or more and 20% or less of the outer diameter of the endmill body.

4. The endmill according to claim 3, wherein, when viewed in a plan view, an angle , around the axial line (O), formed by the radial inner end of each of the short cutting edges and the radial inner end of the second flank surface of the long cutting edges about the axial line is 40° or more and 60° or less.

5. The endmill according to any one of claims 1 to 4, wherein each of the short cutting edges (9B) includes:
the tip (14) provided on a leading-end ridge in the rotational direction;
a first flank surface (11B) adjacent to the rear of the tip in the rotational direction; and
a second flank surface (12B) adjacent to the rear of the first flank surface in the rotational direction, and
wherein a distance between a radial inner end of the second flank surface of the short cutting edge and the axial line when viewed in a plan view is 20% or more and 30% or less.

## Patentansprüche

1. Schaftfräser (1), umfassend:
einen Schaftfräserkörper (2), der eine Schaftform aufweist, in der der Schaftfräserkörper um eine axiale Linie (O) gedreht wird, und der eine Vielzahl von Einschnitten (7, 7A, 7B) einschließt, die sich von einem Stirnende in einer radialen Richtung erstrecken und in einer Umfangsrichtung angeordnet sind; und
eine Vielzahl von Schneidkanten (9, 9A, 9B), die an stirnseitigen Erhöhungen von Wandflächen der Einschnitte bereitgestellt sind, die in einer Drehrichtung des Schaftfräsers gerichtet sind,
wobei eine Drehbahn jeder der Schneidkanten eine Kreisbogenform aufweist, bei der eine Stirnseite, von der sich ein Kreisbogenmittelpunkt auf der axialen Linie (O) befindet, konvex ist, wenn in einer Seitenansicht betrachtet,
ein Krümmungsradius (R) der Drehbahn jeder der Schneidkanten größer als 1/2 eines Außendurchmessers des Schaftfräserkörpers ist,
eine Spitze (14) jeder der Schneidkanten in einer konvexen Form zu einer Seite in der Drehrichtung gekrümmt ist, wenn in einer Draufsicht betrachtet, und eine maximale Projektionsdimension zur Seite in der Drehrichtung in Bezug auf eine virtuelle Linie, die beide radiale Enden der Spitze verbindet, 3 % oder mehr und 4 % oder weniger des Außendurchmessers des Schaftfräserkörpers beträgt, und
die Vielzahl von Schneidkanten eine Vielzahl von langen Schneidkanten (9A), die in gleichen Abständen in der Umfangsrichtung angeordnet sind, und kurzen Schneidkanten (9B) einschließt, die zwischen den langen Schneidkanten in der Umfangsrichtung angeordnet sind und eine Länge aufweisen, die kürzer ist als die der langen Schneidkanten,
wobei eine Bodenfläche (7c) jedes der Einschnitte, die zur Stirnseite gerichtet sind, in Bezug auf eine zur axialen Linie orthogonale Ebene um 40° oder mehr und 50° oder weniger geneigt ist.

2. Schaftfräser nach Anspruch 1, wobei ein Abstand zwischen einem radialen inneren Ende jeder der kurzen Schneidkanten und der axialen Linie, wenn in einer Draufsicht betrachtet, 4 % oder mehr und 9 % oder weniger des Außendurchmessers des Schaftfräserkörpers beträgt.

3. Schaftfräser nach einem der Ansprüche 1 oder 2, wobei jede der langen Schneidkanten (9, 9A, 9B) Folgendes einschließt:
die Spitze (14), die an einer stirnseitigen Erhöhung in der Drehrichtung bereitgestellt ist;
eine erste Flankenfläche (11, 11a, 11B) angrenzend an die Rückseite der Spitze in der Drehrichtung; und
eine zweite Flankenfläche (12, 12A, 12B) angrenzend an die Rückseite der ersten Flankenfläche in der Drehrichtung, und
wobei ein Abstand zwischen einem radialen inneren Ende der zweiten Flankenfläche der langen Schneidkante und der axialen Linie, wenn in einer Draufsicht betrachtet, 10 % oder mehr und 20 % oder weniger des Außendurchmessers des Schaftfräserkörpers beträgt.

4. Schaftfräser nach Anspruch 3, wobei, wenn in einer Draufsicht betrachtet, ein Winkel um die axiale Linie (O), der durch das radiale innere Ende jeder der kurzen Schneidkanten und das radiale innere Ende der zweiten Flankenfläche der langen Schneidkanten um die axiale Linie gebildet wird, 40° oder mehr und 60° oder weniger beträgt.

5. Schaftfräser nach einem der Ansprüche 1 bis 4, wobei jede der kurzen Schneidkanten (9B) Folgendes einschließt:
die Spitze (14), die an einer stirnseitigen Erhöhung in der Drehrichtung bereitgestellt ist;
eine erste Flankenfläche (11B) angrenzend an die Rückseite der Spitze in der Drehrichtung; und
eine zweite Flankenfläche (12B) angrenzend an die Rückseite der ersten Flankenfläche in der Drehrichtung, und
wobei ein Abstand zwischen einem radialen inneren Ende der zweiten Flankenfläche der kurzen Schneidkante und der axialen Linie, wenn in einer Draufsicht betrachtet, 20 % oder mehr und 30 % oder weniger beträgt.

## Revendications

1. Fraise en bout (1) comprenant :
un corps de fraise en bout (2) présentant une forme d'arbre dans laquelle le corps de fraise en bout est tourné autour d'une ligne axiale (O) et incluant une pluralité d'entailles (7, 7A, 7B) qui s'étendent depuis une extrémité d'attaque dans une direction radiale et sont disposées dans une direction circonférentielle ; et
une pluralité d'arêtes de coupe (9, 9A, 9B) formées sur des arêtes côté extrémité d'attaque de surfaces de paroi des entailles dirigées dans un sens de rotation de la fraise en bout,
dans laquelle une trajectoire de rotation de chacune des arêtes de coupe présente une forme d'arc de cercle dans laquelle un côté extrémité d'attaque dont un centre d'arc de cercle est situé sur la ligne axiale (O) est convexe lorsqu'il est vu en vue latérale,
un rayon de courbure (R) de la trajectoire de rotation de chacune des arêtes de coupe est supérieur à 1/2 d'un diamètre externe du corps de fraise en bout,
une pointe (14) de chacune des arêtes de coupe est courbée dans une forme convexe vers un côté dans le sens de rotation lorsqu'elle est vue dans une vue en plan et une dimension de projection maximale vers le côté dans le sens de rotation par rapport à une ligne virtuelle reliant les deux extrémités radiales de la pointe est de 3 % ou plus et de 4 % ou moins du diamètre externe du corps de fraise en bout, et
la pluralité d'arêtes de coupe inclut une pluralité d'arêtes de coupe longues (9A) disposées à intervalles égaux dans la direction circonférentielle et des arêtes de coupe courtes (9B) disposées entre les arêtes de coupe longues dans la direction circonférentielle et présentant une longueur plus courte que celle des arêtes de coupe longues,
dans laquelle une surface de fond (7c) de chacune des entailles dirigée vers le côté extrémité d'attaque est inclinée à 40° ou plus et à 50° ou moins par rapport à un plan orthogonal à la ligne axiale.

2. Fraise en bout selon la revendication 1, dans laquelle une distance entre une extrémité radiale interne de chacune des arêtes de coupe courtes et la ligne axiale lorsqu'elle est vue dans une vue en plan est de 4 % ou plus et de 9 % ou moins du diamètre externe du corps de fraise en bout.

3. Fraise en bout selon l'une quelconque de la revendication 1 ou la revendication 2, dans laquelle chacune des arêtes de coupe longues (9, 9A, 9B) inclut :
la pointe (14) formée sur une arête côté extrémité d'attaque dans le sens de rotation ;
une première surface de dépouille (11, 11a, 11B) adjacente à l'arrière de la pointe dans le sens de rotation ; et
une seconde surface de dépouille (12, 12A, 12B) adjacente à l'arrière de la première surface de dépouille dans le sens de rotation, et
dans laquelle une distance entre une extrémité radiale interne de la seconde surface de dépouille de l'arête de coupe longue et la ligne axiale lorsqu'elle est vue dans une vue en plan est de 10 % ou plus et de 20 % ou moins du diamètre externe du corps de fraise en bout.

4. Fraise en bout selon la revendication 3, dans laquelle, lorsqu'elle est vue dans une vue en plan, un angle, autour de la ligne axiale (O), formé par l'extrémité radiale interne de chacune des arêtes de coupe courtes et l'extrémité radiale interne de la seconde surface de dépouille des arêtes de coupe longues autour de la ligne axiale est de 40° ou plus et de 60° ou moins.

5. Fraise en bout selon l'une quelconque des revendications 1 à 4, dans laquelle chacune des arêtes de coupe courtes (9B) inclut :
la pointe (14) formée sur une arête côté extrémité d'attaque dans le sens de rotation ;
une première surface de dépouille (11B) adjacente à l'arrière de la pointe dans le sens de rotation ; et
une seconde surface de dépouille (12B) adjacente à l'arrière de la première surface de dépouille dans le sens de rotation, et
dans laquelle une distance entre une extrémité radiale interne de la seconde surface de dépouille de l'arête de coupe courte et la ligne axiale lorsqu'elle est vue dans une vue en plan est de 20 % ou plus et de 30 % ou moins.
